# EUROPEAN PATENT APPLICATION

(11) **EP 2 133 140 A2**
(43) Date of publication of application: **16.12.2009**
(21) Application number: 09169618.7
(22) Date of filing: 01.03.2006
(51) Int. Cl.: B01J 13/16, A01N 25/28

(54) **Fast-release microcapsule products**

(30) Priority: 01.03.2005 US 656895 P
(62) Divisional of application: 06708580.3
(71) Applicant: BASF SE, 67056 Ludwigshafen (DE)
(72) Inventor: Dexter, Robin, Yardley, PA, 19067 (US); Tomasik, Michael J., Apex, NC 27523 (US); Cannan, Terrance M., Raleigh, North Carolina 27615, . (US)

(57) **Abstract**

The present invention provides a process for the preparation of microcapsule compositions, methods for using those microcapsule compositions, compositions containing those microcapsule compositions and microcapsules prepared by the process of the present invention.

## Description

The present invention provides a process for the preparation of microcapsule compositions, methods for using those microcapsule compositions, compositions containing those microcapsule compositions and microcapsules prepared by the process of the present invention.

The preparation of microcapsule compositions by interfacial polymerization is well known in the art (see, for example, U.S. 3,577,515; U.S. 4,280,833; and U. S. 5, 310,721). In those patents, microcapsule compositions are prepared in a similar fashion by reaction an emulsion containing various emulsifiers, a first wall forming component, material to be encapsulated and water with a complementary second wall forming component.

Although those processes are useful for the preparation of certain microcapsule compositions, there still is a need in the art for fast release microcapsules and a process to prepare such microcapsule compositions.

The achievement of a preferred balance of storage stability with bioactivity requires careful control of the shell wall properties. A thick, non-permeable wall will provide good storage stability for capsule suspensions or spray-dried powders produced from capsule suspension but may have very poor bioactivity.

In actual application conditions in the field, the release rate is dependent on ambient conditions: weather, soil temperature, wetting and drying, direct sunlight and mechanical treatment, all of which can cause a change in release rate or cause rupture of the capsules. Such a dependency can cause variability of the bioactivity under some conditions that may limit the usefulness of the product.

In certain applications it is desirable to have a storage-stable product provided as a microcapsule dispersion in an aqueous based formulation or spray-dried powder derived from the microcapsule dispersion, which will release the active ingredient more rapidly on application, i.e. dilution in water, so that variability is minimized.

It is the object of this invention to describe processes and compositions of microcapsules which have storage stability (with wall compositions similar to normal capsules) but which are modified so as to release the active ingredient more rapidly on dilution in water.

Normal capsules and their preparation process have been described (US Patents 5,910,314, 5,705,174 to BASF) wherein salts are incorporated into the external aqueous phase of the microcapsule suspension but these microcapsules leave room for improvement, for example regarding fast release properties.

It is also an object of the present invention to provide fast release microcapsules.

It is also an object of the present invention to provide a process for the preparation of stable microcapsule compositions that in agronomical use exhibit fast-release properties.

Furthermore, it is desirable to provide new formulations for the treatment of seeds, since seed treatment provides the farmer a convenient way to protect seed from fungal or insecticidal infestination. Herein, it is furthermore desirable to modify the release profile such that the active ingredient can be made bioavailable shortly after sowing.

It is therefore also an object of the present invention to provide a formulation suitable for seed treatment.

In the microencapsulated products of the invention, bioactive materials are contained in a wall or shell. The shell is designed with a chemical composition and thickness that allows for adequate long-term storage stability together with sufficiently rapid release of the active ingredient to provide the required bioactivity.
The procedure for incorporating ingredients that modify the behavior of the capsules when diluted in water is also an embodiment of this invention.

Accordingly, this invention relates to a microcapsule composition that is stable on storage and allows fast release of the capsule contents at the time of application.

Another embodiment of this invention relates to the process for making the microcapsule composition.

Yet another embodiment of the invention relates to the use of the microcapsule compositions of the invention to control undesired plants.

The present invention relates to a storage stable microcapsule composition wherein the active ingredient and finely divided material, present as either a suspension or emulsion, that will take up water upon dilution are contained within the microcapsule.

The invention also relates to the process for making such a microcapsule composition. In particular, the invention relates to a process for the preparation of a microcapsule composition which process comprises:
(1.1) mixing a water immiscible solvent and/or at least one water immiscible active ingredient and a water immiscible surfactant or a mixture of water immiscible surfactants;
(1.2) adding to this mixture a water absorbant component, and
(1.3) homogenizing the mixture yielding a dispersion with a medium particle size of the dispersed particles of less than 2 µm, yielding mixture (I)
(2) subsequently combining mixture (I) with a microcapsule wall forming monomer 1 yielding mixture (III);
(3) combining mixture (III) with an aqueous phase comprising water soluble salt and a water soluble emulsifier mixture (IV) and
(4) combiningmixture (IV) with a microcapsule wall forming monomer 2.

After step (4), an anti-settlling agent can be added.

The homogenizing of step (1.3) can be performed, for example via sufficiently high shear mixer (such as produced by Waring , IKA or Ross). The combining of step (2), can be performed for example under agitation (for example under low shear mixing conditions such as low speed agitation or static mixers). The combining of step (3), can be performed for example under mechanical high shear agitation or sonication. The combining of step (4), can be performed for example under low speed agitation via mechanical agitation or static mixers.

The term "at least one water immiscible active ingredient" means that either one or a combination of at least two water immiscible active ingredients can be used.

Another embodiment of the above-mentioned process is **characterized in that** after step (1.3), a further step is introduced, in which mixture (I) is combined with at least one water immiscible active ingredient (I), yielding mixture (II). The combining can be performed for example under low shear agitation or static mixer.

The water immiscible active ingredient (or water immiscible active ingredients) of step 1.3 can be either identical with the water immiscible active ingredient (or water immiscible active ingredients) of step 1.4 or different from the water immiscible active ingredient (or water immiscible active ingredients) of step 1.3. In a preferred embodiment, the water immiscible active ingredient (or water immiscible active ingredients) of step 1.3 is (are) identical with the water immiscible active ingredient (or water immiscible active ingredients) of step 1.4.

In the process of the present invention, the water adsorbant component is added in the form of
(a) an aqueous solution of the water adsorbant component;
(b) a suspension of the water adsorbant component in a water immiscible solvent;
(c) a dispersion of water adsorbant component in water.

In one embodiment of the present invention, the process comprises the following step
(1) Combining under agitation an internal phase water absorbing component (I), (which is a phase comprising a water adsorbing component) obtainable by
   (1.1) mixing a water immiscible solvent and/or a portion of a water immiscible active ingredient and water immiscible surfactants or emulsifiers,
   (1.2) adding to this mixture an aqueous solution of the water absorbant component, and
   (1.3) homogenizing the mixture yielding an emulsion with a medium particle size of the emulgated particles of less than 2 µm;
   (1.4) with an internal phase comprising an active ingredient, yielding a mixture (II),
(2) subsequently combining under agitation mixture (II) with a microcapsule wall forming monomer 1 yielding mixture (III);
(3) combining mixture (III) under agitation with an aqueous phase comprising water soluble salt and emulsifier yielding mixture (IV) and
(4) combining mixture (IV) with a microcapsule wall forming monomer 2 and option^ ally subsequently with an anti-settling agent.

In a preferred embodiment, 15% by weight-1 00% by weight, more preferably 35% by weight-100% by weight, most preferably 100% by weight from the total amount of the water immiscilble active ingredient(s) is used in step 1.1 (respectively step (A) Ia)); and 0% by weight-85% by weight, more preferably 0% by weight-65% by weight, most preferably 0% by weight from the total amount of the water immiscilble active ingredient(s) in step 1.4 (respectively step (A) Ic); wherein the sum of the portions of the water immiscilble active ingredient(s) is 100% by weight.

The process of the invention can be conducted at various temperature ranges. It may be advanageous to perform the process of the present invention at elevated temperature ranges. For example, the process may be conducted at a temperature from 20°C to 95°C, preferably from 35°C to 85°C.

The microcapsules are formed in an aqueous salt solution using interfacial polymerization.

The internal phase of the microcapsules is processed differently than with the known process to prepare microcapsules, so as to incorporate within it finely divided materials, which will take up water, in general by an osmotic process ("internal phase water absorbing component (I)").

Microcapsules made in this way are stable and do not swell.

The water adsorbant component can be selected from the group consisting of salts, such as inorganic or organic salts, or mixtures of salts, or a low molecular organic compound and water attracting materials (e.g. polymers).

As set forth above, the the water adsorbant component is added in the form of
(a) an aqueous solution of the water adsorbant component, wherein preferably, the water adsorbant is a salt or a low molecular organic compound, more preferably a salt such as inorganic or organic salts, or mixtures of salts;
(b) a suspension of the water adsorbant component in a water immiscible solvent; , wherein preferably, the water adsorbant is a salt or a low molecular organic compound, more preferably a salt such as inorganic or organic salts, or mixtures of salts; or
(c) a dispersion of water adsorbant component in water, wherein the water adsorbant component is a water attracting material (or swelling material).

In these embodiments, thehe following materials water adsorbant materials are generally used:
1. (b) Dispersions (suspensions (c)) of a solid (water adsorbant component) which is soluble in water but not in a nonpolar organic solvent. For example salts, such as inorganic or organic salts, or mixtures of salts, for example salts, which comprise as cationic component alkaline metals such as sodium, potassium; or earth alkaline metals such as calcium or magnesium and as anionic component a halogen, for example-fluoride, chloride, bromide or anions of anorganci acids such as borate, carbonate, bicarbonate, nitrate, aluminate, silicate, monophosphate, biphosphate, triphosphate, monosulfate, bisulfate, formate, acetate, propionate, citrate, lactate, preferably salts, which comprises as catioinic component alkaline metals such as sodium, potassium or earth alkaline metals such as magnesium, and as anionic component chloride, sulfate, carbonate or bicarboantefor example sodium chloride, sodium sulfate, magnesium sulfate, sodium bicarbonate, potassium carbonate, most preferably sodium chloride, magnesium sulfate, sodium bicarbonate and potassium carbonate can be finely milled and incorporated in the core. Alternatively, also low molecular organic compounds such as propylene glycol, ethylene glycol, triethylene glycol, polyethylene glycol, ethoxylated glucose, propoxylated glucose, ethoxylated glycerine, hydrogenated starch hydrolysate, glucose glutamate monnitol, sorbital and glycerinmannitol, sorbital or glycerin can be used. Preferably, a salt is used.
2. (a) (Aqueous) Solutions of salts, such as inorganic or organic salts, or mixtures of salts, for example salts, which comprise as cationic component alkaline metals such as sodium, potassium; or earth alkaline metals such as calcium or magnesium and as anionic component a halogen, for example-fluoride, chloride, bromide or anions of anorganci acids such as borate, carbonate, bicarbonate, nitrate, aluminate, silicate, monophosphate, biphosphate, triphosphate, monosulfate, bisulfate, formate, acetate, propionate, citrate, lactate, preferably salts, which comprises as catioinic component alkaline metals such as sodium, potassium or earth alkaline metals such as magnesium, and as anionic component chloride, sulfate, carbonate or bicarboante for example sodium chloride, sodium sulfate, magnesium sulfate, sodium bicarbonate, potassium carbonate, most preferably sodium chloride, magnesium sulfate, sodium bicarbonate and potassium carbonate can be emulsified into the capsule core. Alternatively, also solutions of low molecular organic compounds such as propylene glycol, ethylene glycol, triethylene glycol, polyethylene glycol, ethoxylated glucose, propoxylated glucose, ethoxylated glycerine, hydrogenated starch hydrolysate, glucose glutamate monnitol, sorbital and glycerin, mannitol, sorbital or glycerin can be used. Preferably, a salt is used.

The use of carbonates as salts is effective because as well as the osmotic effect of swelling by water transfer, at low pH there is a more rapid swelling possibly produced by evolution of carbon dioxide gas. Thus, for options 1 (b) and 2 (a) especially preferred salts are those which comprise as cationic component sodium, potassium, calcium or magnesium and as anionic component carbonate or bicarbonate- for example sodium bicarbonate, potassium carbonate

Further it is also possible to incorporate other water absorbing or swelling materials as internal phase water absorbing component , wherein said water adsorbing or swelling materials are used in the process of the present invention in form of a dispersion of water adsorbant component in water. Examples of e.g. polymers, preferably crosslinked organic polymers, for instance polyacrylamide or polyvinyl pyrrolidone, pyrrolidone copolymers, polydextrose and cellulosic materials.

These usually do not dissolve in the water transferred but absorb the water and swell.

In either case the internal phase water absorbing component (I) (as dispersion or emulsion of the water soluble material in the core material) is prepared as a separate phase prior to microencapsulation.

The diameter of the emulsified droplets or dispersed particles must be smaller than the intended microcapsule diameter, preferably the medium particle size of said emulsified droplets or dispersed particles is less than 2 µm most preferably less than 1µm median in diameter.

The process of dispersion or emulsification requires usually the use of water-immiscible dispersing agents or emulsifiers, which do not interfere with the chemical reactions during microencapsulation.

Water-immiscible solvents may be included in the core material for convenience in preparing the dispersion or emulsion of the water absorbing substance.

Examples of water-immiscible surfactants (dispersing agents or emulsifiers) are known to the expert, disclosure can be found in the examples and in US 5,705,174 enclosed to this application by reference. Examples of water-immiscible dispersing agents or emulsifiers include, but are not limited to fatty acid esters, fatty acid polyethylene glycol esters such as 12-Hydroxystearic acid, polyethylene glycol copolymers amide ester surfactants, C10 to C16 amides, sorbitan polyethylene glycol esters, alkypolyglycosides, alkyl ether citrates. A preferred water-immiscilble surfactant is a is 12-Hydroxystearic acid, polyethylene glycol copolymer.

Examples of water-immiscible solvents are known to the expert, disclosure can be be found in the examples and in US 5,705,174 enclosed to this application by reference. Examples for said solvents are aromatic and/or aliphatic hydrocarbons, e.g. those as described in the examples of the instant application.

Water immiscible solvent means that every solvent, which has a water solubility of less than 50%, preferably less than 25%, more preferably less than 10% and most preferably less than 5% and which do not react undesirably with any of the ingredients used in the invention process.

For example, the following water immiscible solvents can be used: salt water-immiscible hydrocarbons, aromatic chlorinated hydrocarbons, chlorinated maleic hydrocarbons, ketones, long chain esters and mixtures thereof, for example C8 to C11 aromatic petroleum derivatives (aromatic hydrocarbons) with a solubility in water < 0.1%(w/w) and a distillation range from 130°C to 300°C (commercial available under the following brand names: Solvesso 100, Solvesso 150, Solvesso 200, Solvesso 150ND, solvesso 200ND, Aromatic 150, Aromatic 200, Hydrosol A 200, Hydrosol A 230/270, Caromax 20,Caromax 28, Aromat K 150, Aromat K 200, Shellsol A 150, Shellsol A 100, Fin FAS-TX 150, Fin FAS-TX 200), Xylene, Cyclohexane, Cyclopentane, Pentane, Hexane, Heptane, 2-Methylpentane, 3-Methylpentane, 2-Methylhexane, 3-Methylhexane, 2-Methylbutane, 2,3-Dimethylbutane, Methylcyclopentane, Methylcyclohexane, 2,3-Dimethylpentane, 2,4-Dimethylpentane, Benzene, 1-Pentene, 2-Pentene, 1-Hexene, 1-Heptene, Cyclohexen, 1-Butanol, Ethylvinylether, Propylether, Isopropylether, Butylvinylether, Butylethylether, 1,2-Epoxybutane, Furan, Tetrahydropyran, 1-Butanal, 2-Methylpropanal, 2-Pentanone, 3-Pentanone, Fluorbenzene, Hexafluorbenzene, Ethylformate, Propylformate, Isopropylformate, Ethylacetate, Vinylacetate, Isopropylacetate, Ethylpropionate, Methylacrylate, Ethylacrylate, Methylmethacrylate, Chlorethane, 1-Chlorpropane, 2-Chlorpropane, 1-Chlorbutane, 2-Chlorobutane, 1-Chloro-2-methylpropane, 2-Chloro-2-methylpropane, 1-Chloro-3-methylbutane, 3-Chloropropene, Dichlormethane, Trichlormethane, Tetrachlormethane, 1,1-Dichloroethane, 1,2-Dichloroethane, 1,2-Dichlorpropane, 1,1,1-Trichloroethane, 1,1-Dichlorethylene, 1,2-Dichlorethylene, Trichlorethylene, Brommethane, 1-Bromopropane, 2-Bromopropane, 1-Bromobutane, 2-Bromobutane, 2-Bromo-2-methylpropane, Bromomethylene, lodomethane, lodoethane, 2-lodopropane, Trichlorofluoromethane, Dichlorofluoromethane, Dibromofluoromethane, Bromchlormethane, Bromochloorfluoromethane, 1,1,2-Trichloro-1,2,2-trifluoroethane, 1,1,2,2-Tetrachlorodifluoroethane, 1,2-Dibromotetrafluoroethane, 1,2-Dibromo-1,1-Diflouroethane, 1,1-Dichloro-2,2-Difluoroethylene, Propionitrile, Acrylonitrile, Methacrylonitrile, Triethylamine, carbon disulfide, 1-Butanethiole, Methylsulfide, Ethylsulfide and Tetramethylsilane

Examples of suitalble anti settling agents or thickener are known to the expert, examples are polysaccharides or organic layer materials such as Xanthan Gum (Kelzan® of Kelco), Rhodopol® 23 (Rhone Poulenc) or Veegum® (R.T. Vanderbilt) or Attaclay® (Engelhardt).

Examples of suitalble water soluble emulsifiers are known to the expert, examples are In particular, emulsifiers such as ethoxylated lignosulfonic acid salts, lignosulfonic acid salts such as alkali metal, alkaline earth metal and ammonium salts of lignosulfonic acid, oxidized lignins, lignin salts. salts of styrene-maleic anhydride copolymers, salts of partial esters of styrene-maleic anhydride copolymers, partial salts of polyacrylic acid terpolymers, wehrein sodium, potassium, magnesium, calcium and ammonium salts are generally preferred; naphthalenesulfonic acid, phenolsulfonic acid, dibutylnaphthalenesulfonic acid, alkylarylsulfonates, alkyl sulfates, alkylsulfonates, fatty alcohol sulfates, fatty acids and sulfated fatty alcohol glycol ethers, furthermore condensates of sulfonated naphthalene and naphthalene derivatives with formaldehyde, condensates of naphthalene or of naphthalenesulfonic acid with phenol and formaldehyde, polyoxyethylene octylphenol ether, ethoxylated isooctylphenol, octylphenol, nonylphenol, alkylphenol polyglycol ethers, tributylphenyl polyglycol ether, tristearylphenyl polyglycol ether, alkylaryl polyether alcohols, alcohol and fatty alcohol ethylene oxide condensates, ethoxylated castor oil, polyoxyethylene alkyl ethers, ethoxylated polyoxypropylene, lauryl alcohol polyglycol ether acetal, sorbitol esters, lignosulfite waste liquors and methylcellulose; preferably ethoxylated lignosulfonic acid salts,and oxidized ligins, more preferably ethoxylated lignosulfonic acid salts being more preferred most preferred the sodium salt of ethoxylated acid being.

Examples of water-solulble salts that can be used in step (3) are known to the expert, examples are alkali metal salts of halogens such as chloride, fluoride, bromide preferably chloride or of or of the anionic component of anorganic acids such as sulfates, nitrates, hydrogen sulfates, phosphates, mono hydrogenphosphates,dihydrogenphosphates, for example lithium chloride, sodium chloride, potassium chloride, lithium nitrate, sodium sulfate, potassium sulfate, sodium monohydrogen sulfate, potassium monohydrogen sulfate, sodium dihydrogen phosphate, potassium dihydrogen phosphate; earth alkaline metal salts of halogens such as chloride, fluoride, bromide preferably chloride or of the anionic component of inorganic acids such as sulfates and nitrates, for example such as magnesium chloride, calcium chloride, magnesium nitrate, calcium nitrate, magnesium sulfate; and ammonium salts of halogens such as chloride, fluoride, bromide preferably chloride or of the anionic component of inorganic acids such as sulfates, phosphates, monohydorgenphosphates or dihydrogenphosphates, for example ammonium chloride, ammonium sulfate, ammonium monohydrogen phosphate, ammonium dihydrogen phosphate; preferably sodium chloride, potassium chloride, calcium chloride and magnesium sulfate, most preferably magnesium sulfate.

The following microcapsule wall forming monomer 1 can be used: polyisocyanate, a polyacid chloride, a polychloroformate or a polysufonyl chloride Preferred is a polyisocyanate. Polyisocyanates which are suitable for use include di- and triisocyanates where the isocyanate groups are attached to an aliphatic or aromatic group. Suitable polyisocyanates include tetramethylene diisocyanate, pentamethylene diisocyanate, hexamethylene diisocyanate, toluene diisocyanate, diphenylmethane-4,4'-diisocyanate, polymethylene polyphenylene isocyanate, 2,4,4'-diphenyl ether triisocyanate, 3,3'-dimethyl-4,4'-diphenyl diisocyanate, 3,3'-dimethoxy-4,4'-diphenyl diisocyanate, 1,5-naphthylene diisocyanate, 4,4',4"-triphenylmethane triisocyanate and the like with polymethylene polyphenylene isocyanate being preferred.

The following microcapsule wall forming monomer 2 can be used: a polyamine or a polyol. Preferred is a polyamine.

Polyamines suitable for use in the process of the present invention include ethylenediamine, propylene-1,4-diamine, tetramethylenediamine, pentamethylenediamine, 1,6-hexamethylenediamine, diethylenetriamine, triethylenetetramine, tetraethylenepentamine, pentaethylenehexamine, 4,9-dioxadodecane-1,12-diamine,1,3-phenylenediamine, 2,4- and 2,6-toluenediamine, 4,4'-diaminodiphenylmethane and the like with 1,6-hexamethylenediamine being preferred. Hydrochloride salts of those polyamines may also be used in the process of the present invention.

Active ingredients that can be used in the microcapsule compositions of the invention include herbicides, insecticides, acaricides, nematicides, fungicides , safeners, algicides, molluscicides, mildewicides, ectoparasiticides and the like, which are liquid at process temperature and/or soluble in a water immiscible (which is a non-polar) solvent.

Thus, the term "water immiscible ingredient" within the meaning of the invention refers at least one compound selected from the group consiting of fungicides, insecticides, nematicides, herbicide and/or safener

For example, the following list of pesticides together with which the compounds according to the invention can be used, is intended to illustrate the possible combinations, but not to impose any limitation:
A.1. Organo(thio)phosphates: azinphos-methyl, chlorpyrifos, chlorpyrifos-methyl, chlorfenvinphos, diazinon, disulfoton, ethion, fenitrothion, fenthion, isoxathion, malathion, methidathion, methyl-parathion, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
A.2. Carbamates: alanycarb, bendiocarb, benfuracarb, carbaryl, carbofuran, carbosulfan, fenoxycarb, furathiocarb, methiocarb, methomyl, oxamyl, pirimicarb, thiodicarb, triazamate;
A.3. Pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin;
A.4. Growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, a tetronic acid derivative of formula ┌¹ , 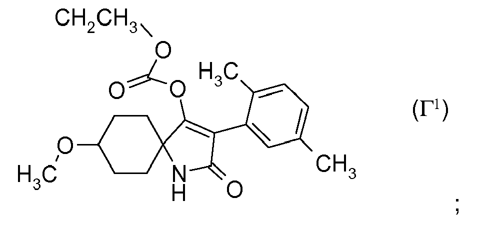
A.5. Nicotinic receptor agonists/antagonists compounds: clothianidin, dinotefuran, thiacloprid;
A.6. GABA antagonist compounds: acetoprole, endosulfan, ethiprole, fipronil, vaniliprole;
A.7. Macrocyclic lactone insecticides: abamectin, emamectin, milbemectin, lepimectin, spinosad;
A.8. METI I acaricides: fenazaquin, pyridaben, tebufenpyrad, tolfenpyrad;
A.9. METI II and III compounds: acequinocyl, fluacyprim, hydramethylnon;
A.10. Uncoupler compounds: chlorfenapyr;
A.11. Oxidative phosphorylation inhibitor compounds: cyhexatin, diafenthiuron, fenbutatin oxide, propargite;
A.12. Moulting disruptor compounds: cryomazine;
A.13. Mixed Function Oxidase inhibitor compounds: piperonyl butoxide;
A.14. Sodium channel blocker compounds: indoxacarb, metaflumizone;
A.15. Various: benclothiaz, bifenazate, flonicamid, pyridalyl, pymetrozine, sulfur, thiocyclam und aminoisothiazole compounds of formula ┌², 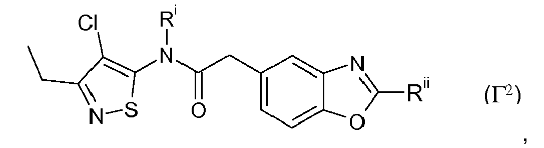 wherein Rⁱ is -CH₂OCH₂CH₃ or H and Rⁱⁱ is CF₂CF₂CF₃ or CH₂CH(CH₃)₃, anthranilamide compounds of formula ┌³ 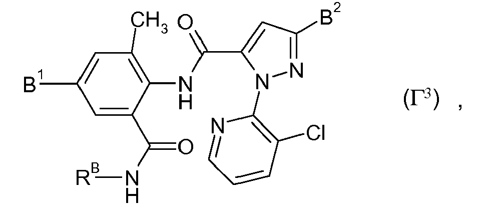 wherein B¹ is hydrogen or a chlorine atom, B² is a bromine atom or CF₃, and R^{B} is CH₃ or CH(CH₃)₂, and malononitrile compounds as described in JP 2002 284608, WO 02/89579, WO 02/90320, WO 02/90321, WO 04/06677, WO 04/20399, or JP 2004 99597,N-R'-2,2-dihalo-1-R"cyclo-propanecarboxamide-2-(2,6-dichloro-aaa-tri-fluoro-p-tolyl)hydrazone or N-R'-2,2-di(R"')propionamide-2-(2,6-dichloro-ααα-trifluoro-p-tolyl)-hydrazone, wherein R' is methyl or ethyl, halo is chloro or bromo, R" is hydrogen or methyl and R"' is methyl or ethyl;

Fungicide such as
1. Strobilurins such as
   Azoxystrobin, Dimoxystrobin, Enestroburin, Fluoxastrobin, Kresoxim-methyl, Metominostrobin, Picoxystrobin, Pyraclostrobin, Trifloxystrobin, Orysastrobin, (2-Chlor-5-[1-(3-methyl-benzyloxyimino)-ethyl]-benzyl)-carbaminsäuremethylester, (2-Chlor-5-[1-(6-methyl-pyridin-2-ylmethoxyimino)-ethyl]-benzyl)-carbaminsäuremethyl ester, 2-(ortho-((2,5-Dimethylphenyl-oxymethylen)phenyl)-3-methoxy-acrylsäuremethylester;
2. Carboxamides such as
   - Carbonsäureanilide: Benalaxyl, Benodanil, Boscalid, Carboxin, Mepronil, Fenfuram, Fenhexamid, Flutolanil, Furametpyr, Metalaxyl, Ofurace, Oxadixyl, Oxycarboxin, Penthiopyrad, Thifluzamide, Tiadinil, 4-Difluormethyl-2-methyl-thiazol-5-carbonsäure-(4'-brom-biphenyl-2-yl)-amid, 4-Difluormethyl-2-methyl-thiazol-5-carbonsäure-(4'-trifluormethyl-biphenyl-2-yl)-amid, 4-Difluormethyl-2-methyl-thiazol-5-carbonsäure-(4'-chlor-3'-fluor-biphenyl-2-yl)-amid, 3-Difluormethyl-1-methyl-pyrazol-4-carbonsäure-(3',4'-dichlor-4-fluor-biphenyl-2-yl)-amid, 3,4-Dichlor-isothiazol-5-carbonsäure (2-cyano-phenyl) amid;
   - Carbonsäuremorpholide: Dimethomorph, Flumorph;
   - Benzoesäureamide: Flumetover, Fluopicolide (Picobenzamid), Zoxamide;
   - Sonstige Carbonsäureamide: Carpropamid, Diclocymet, Mandipropamid, N-(2-(4-[3-(4-Chlor-phenyl)-prop-2-inyloxy]-3-methoxy-phenyl)-ethyl)-2-methansulfonylamino-3-methyl-butyramid, N-(2-(4-[3-(4-Chlor-phenyl)-prop-2-inyloxy]-3-methoxy-phenyl)-ethyl)-2-ethansulfonylamino-3-methyl-butyramid;
3. Azoles such as
   - Triazoles: Bitertanol, Bromuconazole, Cyproconazole, Difenoconazole, Diniconazole, Enilconazole, Epoxiconazole, Fenbuconazole, Flusilazole, Fluquinconazole, Flutriafol, Hexaconazol, Imibenconazole, Ipconazole, Metconazole, Myclobutanil, Penconazole, Propiconazole, Prothioconazole, Simeconazole, Tebuconazole, Tetraconazole, Triadimenol, Triadimefon, Triticonazole;
   - Imidazoles: Cyazofamid, Imazalil, Pefurazoate, Prochloraz, Triflumizole;
   - Benzimidazole: Benomyl, Carbendazim, Fuberidazole, Thiabendazole;
   - varous: Ethaboxam, Etridiazole, Hymexazole;
4. Nitrogenous heterocyclyl compounds such as
   - Pyridines: Fluazinam, Pyrifenox, 3-[5-(4-Chlor-phenyl)-2,3-dimethyl-isoxazolidin-3-yl]-pyridin;
   - Pyrimidines: Bupirimate, Cyprodinil, Ferimzone, Fenarimol, Mepanipyrim, Nuarimol, Pyrimethanil;
   - Piperazine: Triforine;
   - Pyrrole: Fludioxonil, Fenpiclonil;
   - Morpholine: Aldimorph, Dodemorph, Fenpropimorph, Tridemorph;
   - Dicarboximide: Iprodione, Procymidone, Vinclozolin;
   - varous: Acibenzolar-S-methyl, Anilazin, Captan, Captafol, Dazomet, Diclomezine, Fenoxanil, Folpet, Fenpropidin, Famoxadone, Fenamidone, Octhilinone, Probenazole, Proquinazid, Quinoxyfen, Tricyclazole, 5-Chlor-7-(4-methyl-piperidin-1-yl)-6-(2,4,6-trifluor-phenyl)-[1,2,4]triazolo[1,5-a]pyrimidin, 2-Butoxy-6-iodo-3-propyl-chromen-4-on, 3-(3-Brom-6-fluoro-2-methyl-indol-1-sulfonyl)-[1,2,4]triazol-1-sulfonsäuredimethylamid;
5. Carbamate und Dithiocarbamate
   - Carbamates: Diethofencarb, Flubenthiavalicarb, Iprovalicarb, Propamocarb, 3-(4-Chlor-phenyl)-3-(2-isopropoxycarbonylamino-3-methyl-butyrylamino)-propionsäuremethylester, N-(1-(1-(4-cyanophenyl)ethansulfonyl)-but-2-yl) carbaminsäure-(4-fluorphenyl)ester;
6. Other fungicides such as
   - organometallic compounds: fentin salts;
   - sulfur-containing heterocyclyl compounds: isoprothiolane, dithianon;
   - organophosphorus compounds: edifenphos, fosetyl, fosetyl-aluminum, iprobenfos, pyrazophos, tolclofos-methyl,
   - organochlorine compounds: thiophanate-methyl, chlorothalonil, dichlofluanid, tolylfluanid, flusulfamide, phthalide, hexachlorbenzene, pencycuron, quintozene;
   - nitrophenyl derivatives: binapacryl, dinocap, dinobuton;: Thiophanate Methyl,
   - others: spiroxamine, cyflufenamid, cymoxanil, metrafenone

Herbicides such as
b1) lipid biosynthesis inhibitors such as z.B. Chlorazifop, Clodinafop, Clofop, Cyhalofop, Ciclofop, Fenoxaprop, Fenoxaprop-p, Fenthiaprop, Fluazifop, Fluazifop-P, Haloxyfop, Haloxyfop-P, Isoxapyrifop, Metamifop, Propaquizafop, Quizalofop, Quizalofop-P, Trifop, Butroxydim, Cycloxydim, Profoxydim, Sethoxydim, Tepraloxydim, Tralkoxydim, Butylate, Cycloat, Diallat, Dimepiperat, EPTC, Esprocarb, Ethiolate, Isopolinate, Methiobencarb, Molinate, Orbencarb, Pebulate, Prosulfocarb, Sulfallat, Thiobencarb, Thiocarbazil, Triallat, Vernolat, Benfuresat, Ethofumesat and Bensulid;
b2) ALS inhibitors such as Amidosulfuron, Azimsulfuron, Bensulfuron, Chlorimuron, Chlorsulfuron, Cinosulfuron, Cyclosulfamuron, Ethametsulfuron, Ethoxysulfuron, Flazasulfuron, Flupyrsulfuron, Foramsulfuron, Halosulfuron, Imazosulfuron, Iodosulfuron, Mesosulfuron, Metsulfuron, Nicosulfuron, Oxasulfuron, Primisulfuron, Prosulfuron, Pyrazosulfuron, Rimsulfuron, Sulfometuron, Sulfosulfuron, Thifensulfuron, Triasulfuron, Tribenuron, Trifloxysulfuron, Triflusulfuron, Tritosulfuron, Imazamethabenz, Imazamox, Imazapic, Imazapyr, Imazaquin, Imazethapyr, Cloransulam, Diclosulam, Florasulam, Flumetsulam, Metosulam, Penoxsulam, Bispyribac, Pyriminobac, Propoxycarbazone, Flucarbazone, Pyribenzoxim, Pyriftalid und Pyrithiobac; sofern der pH Wert < 8 ist Verbindungen, die die Photosynthese inhibieren wie Atraton, Atrazine, Ametryne, A-ziprotryne, Cyanazine, Cyanatryn, Chlorazine, Cyprazine, Desmetryne, Dimethametryne, Dipropetryn, Eglinazine, Ipazine, Mesoprazine, Methometon, Methoprotryne, Procyazine, Proglinazine, Prometon, Prometryne, Propazine, Sebuthylazine, Secbumeton, Simazine, Simeton, Simetryne, Terbumeton, Terbuthylazine and Terbutryne;
b4) protoporphyrinogen-IX oxidase inhibitors such as Acifluorfen, Bifenox, Cchlomethoxyfen, Chlornitrofen, Ethoxyfen, Fluorodifen, Fluoroglycofen, Fluoronitrofen, Fomesafen, Furyloxyfen, Halosafen, Lactofen, Nitrofen, Nitrofluorfen, Oxyfluorfen, Fluazolate, Pyraflufen, Cinidon-ethyl, Flumiclorac, Flumioxazin, Flumipropyn, Fluthiacet, Thidiazimin, Oxadiazon, Oxadiargyl, Azafenidin, Carfentrazone, Sulfentrazone, Pentoxazone, Benzfendizone, Butafenacil, Pyraclonil, Profluazol, Flufenpyr, Flupropacil, Nipyraclofen and Etnipromid;
b5) bleacher herbicides such as Metflurazon, Norflurazon, Flufenican, Diflufenican, Picolinafen, Beflubutamid, Fluridone, Flurochloridone, Flurtamone, Mesotrione, Sulcotrione, Isoxachlortole, Isoxaflutole, Benzofenap, Pyrazolynate, Pyrazoxyfen, Benzobicyclon, amitrole, clomazone, Aclonifen, 4-(3-trifluormethylphenoxy)- 2-(4-trifluoromethylphenyl)pyrimidin, und 3-heterocyclyl-substituierte Benzoylderivate der Formel (vgl. WO-A-96/26202, WO-A-97/41116, WO-A-97/41117 und WO-A-97/41118) 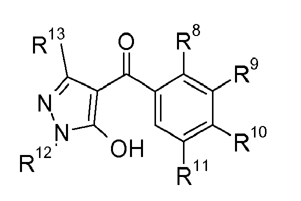 in which the variables R⁸ to R¹³ are as defined below:
   R⁸, R¹⁰ are hydrogen, halogen, C₁-C₆-alkyl, C₁-C₆-haloalkyl, C₁-C₆-alkoxy, C₁-C₆-haloalkoxy, C₁-C₆-alkylthio, C₁-C₆-alkylsulfinyl or C₁-C₆-alkylsulfonyl;
   R⁹ is a heterocyclic radical selected from the group consisting of such as thiazol-2-yl, thiazol-4-yl, thiazol-5-yl, isoxazol-3-yl, isoxazol-4-yl, isoxazol-5-yl, 4,5-dihydroisoxazol-3-yl, 4,5-dihydroisoxazol-4-yl and 4,5-dihydroisoxazol-5-yl, where the nine radicals mentioned may be unsubstituted or mono- or polysubstituted, e.g. mono-, di-, tri- or tetrasubstituted, by halogen, C₁-C₄-alkyl, C₁-C₄-alkoxy, C₁-C₄-haloalkyl, C₁-C₄-haloalkoxy or C₁-C₄-alkylthio;
   R¹¹ is hydrogen, halogen or C₁-C₆-alkyl;
   R¹² is C₁-C₆-alkyl;
   R¹³ is hydrogen or C₁-C₆-alkyl, if the pH is < 8;
b9) mitose inhibitors such as Benfluralin, Butralin, Dinitramine, Ethalfluralin, Fluchloralin, iSopropalin, Methalpropalin, Nitralin, Oryzalin, Pendimethalin, Prodiamine, Profluralin, Trifluralin, Amiprofos-methyl, Butamifos, Dithiopyr, Thiazopyr, Propyzamide, Chlorthal, Carbetamide, Chlorpropham and Propham;
b10) VLCFA inhibitors such as Acetochlor, Alachlor, Butachlor, Butenachlor, Delachlor, Diethatyl, Dimethachlor, Dimethenamid, Dimethenamid-P, Metazachlor, Metolachlor, S-Metolachlor, Pretilachlor, Propisochlor, Prynachlor, Terbuchlor, Thenylchlor, Xylachlor, CDEA, Epronaz, Diphenamid, Napropamide, Naproanilide, Pethoxamid, Flufenacet, Mefenacet, Fentrazamide, Anilofos, Piperophos, Cafenstrole, Indanofan und Tridiphan; Inhibitoren für die Biosynthese von Cellulose wie Dichlobenil, Chlorthiamid, Isoxaben and Flupoxam;
b12) decoupler herbicides such as dinofenate, dinoprop, dinosam, dinoseb, dinoterb, DNOC, etinofen and medinoterb;
b13) various herbicides such as : Benzoylprop, Flamprop, Flamprop-M, Bromobutide, Chlorflurenol, Cinmethylin, Methyldymron, Etobenzanid, Pyributicarb, Oxaziclomefone, Triaziflam und Methyl bromide.

safeners such as
benoxacor, cloquintocet, cyometrinil, dicyclonon, dietholate, fenchlorazole, fenclorim, flurazole, fluxofenim, furilazole, isoxadifen, mefenpyr, mephenate, naphthalic anhydride, 2,2,5-trimethyl-3-(dichloroacetyl)-1,3-oxazolidine (R-29148), 4-(dichloroacetyl)-1-oxa-4-azaspiro[4.5]decane (AD-67; MON 4660) und oxabetrinil.

Particularly suitable herbicides (which represents preferred herbicides) for the microcapsules of the invention are herbicidal compounds including dinitroaniline compounds for example pendimethalin and trifluralin, acetanilide compounds such as alachlor, metolachlor, dimethenamide, acetochlor, metazachlor, propanil and propachlor, bromoxynil esters, 2,4-D esters, MCPA esters, triclopyr esters or mixtures of the above., Preferably, in the process of the present invention, the herbicide is a dinitroaniline compound and/or chloracetanilide, wherein most preferably the dinitroaniline compound is pendimethalin and the chloroacetanilide is dimethenamide or dimethenamide P.

Insecticidal compounds especially suitable for use in the present invention (which represents preferred insecticides) include phosphoric acid ester compounds such as terabufos, malathion, chlorpyrifos, diazinon and profenofos, and pyrethroid compounds such as cypermethrin, alpha-cypermethrin, permethrin hydromethylon, azinphos-methyl, endosulfan, monochlorophos, triazemate and phorate.

Fungicidal compounds especially suitable for use in the present invention (which represents preferred fungicides) include cyprodinil, dinocap, dodemorph, dodemorphacetate, fenpropidin, fenpropimorph, flusilazole, imazalil, myclobutanil, nitrothalisopropyl, penconazol, propamocarb, pyraclostrobin, spiroxamin, trifloxystrobin and propiconazol.

The present invention also comprises microcapsule composition prepared by the process according to the present invention. Optionally, the water based dispersions of microcapsules obtained by the process of the present invention can be dried or separated and/ dried or directly used. Dried microcapsules can be suspended in a solvent, preferably water.
The microcapsules according to the present invention comprise a core, which comprises a continuous phase consisting of water immiscible solvent and/or a water immiscible active ingredient and water immiscible surfactants or a mixture of water immiscible surfactants, wherein in said continuous phase the water adsorbant component is dispersed and wherein the core is surrounded by a shell wall.

In the core, the water adsorbant component may be present in form of an dispersion of solid particles or in form of an aqueous solution or dispersion, which is emulsified in the continous phase of the core material. Preferably, the water adsorbant component is present in form of an aqueous solution, which is emulsified in the continuous phase of the core material.

The microcapsule compositions prepared by the process of the present invention preferably contain 5% to 50%, more preferably 20% to 50%, by weight of the salt water-immiscible material (which is the water immiscible active ingredient) and 5% to 40% by weight, more preferably 10% to about 40% of the dispersion or solution of the water adsorbant component in the core material.

The water-absorbing component of the entire microcapsule composition is from 0.1 to 10% by weight of the composition, preferably from 0.2 to 5% by weight of the composition.

An example, how the process of the present invention can be performed with an water immiscible active ingredient, which provides fast release microcapsules of the invention is as follows:
1. Provide a mixture of water-immiscible solvent and/or a portion of the water-immiscible active ingredient and a water-immiscible surfactant yielding mixture (1).
2. Add to (1) an aqueous solution of materials which form the internal phase water absorbing component (e.g. salt or other water absorbing material, as set forth above) and water soluble additive yielding mixture (2).
3. Homogenize (2), yielding an emulsion or dispersion (3) having a diameter of the emulsified droplets or dispersed particles smaller than the intended microcapsule diameter, preferably having a medium particle size of said emulsified droplets or dispersed particles less than 2 µm most preferably less than 1µm median in diameter.
4. Add active ingredient in liquid form (e.g. molten pendimethalin) under agitation to (3) yielding mixture (4).
5. Add microcapsule wall forming monomer 1 (e.g. diisocyanate polymer) to (4) yielding mixture (5).
6. Add (5) under agitation to an aqueous solution of a water soluble salt (e.g. magnesium sulfate) and an emulsifier yielding emulsion or dispersion (6).
7. Add microcapsule shell forming monomer 2 (e.g. 1,6-hexamethylenediamine) to (6) and strir, yielding mixture (7).
8. Add thickening or anti-settling agent (e.g. Kelzan®).

Examples of water soluble additives, of microcapsule wall forming monomer 1, of microcapsule wall forming monomer 2 and examples of thickening or anti-settling agents are known to the expert, disclosure can be be found in the examples and in US 5,705,174 enclosed to this application by reference and are listed above Parts of the procedure for the preparation of the fast release microcapsules composition of the invention are described in more detail as follows

### 1. Preparation of the aqueous phase.

The aqueous phase is prepared as set forth for the standard procedure

More precisely, a water-soluble salt and an emulsifier are dissolved in water. Optionally, an antifoaming agent may be added. As explained above, this operation can be conducted at various temperature ranges. For example, the mixture can heated, e.g. in if pendimethalin is used in a molten status up to 60°C. For better dissolving, the mixture may be stirred e.g. using a mixer at low speed.
In a preferred embodiment, the external aqueous phase comprises a) from 30 to 95% by weight water, b) from 1 to 10% by weight of emulsifier and c) from 1 to about 20% by weight of salt.

### 2. Preparation of internal phase water-absorbing components (Steps 1 to 3 of the above general method).

To water-immiscible solvent or to a portion of the water immiscible active ingredient there is added water immiscible surfactants or emulsifiers to make a solution (Step (A) Ia)). Next, there is added an aqueous solution of a salt (e.g. NaCl, Mg SO₄, NaHCO₃ more suitable salts are mentioned above), K₂CO₃ (more suitable salts are mentioned above) or other water absorbing or water soluble additive (see above), (Step (A) Ib)) and the mixture is homogenized until a water-in-oil emulsion is formed(Step (A) Ic)). The particle size of the emulsion is preferably less than about 2 microns, more preferably less than about 1 micron median in diameter. As explained above, this operation can be conducted at various temperature ranges. For example, this operation can be conducted at ambient temperature and the emulsion is subsequently heated to 60°C. The amount of salty water or water absorber solution, and the salt or water absorber type are in general important to the effectiveness of the formulation. Sufficient salt water must in general be incorporated to promote rapid uptake of water and swelling of the capsules. However, large amounts of salt water will in general reduce the amount of space available in the formulation for the active ingredient.
From 1 to 50% of the organic phase weight can be incorporated as salty water.Of this, the salt portion can comprise from about 5 to about 50% by weight. The amount of salt depends on its solubility in water.

### 3. Mix internal phase (e.g. molten pendimethalin) with water-absorbing components

Forr example a molten component can be used. However, also liquid a.i.'s or a.i.'s dissolved in an organic solvent, which is not water miscible can be used. Examples of a.i.'s are given above (see my remarks above) The hot (if heating was necessary) internal phase is in general stirred into the emulsion of water-absorbing components or alternatively, the water-absorbing components are stirred into the hot internal phase. When mixed thoroughly, the shell forming monomer 1, e.g. polyisocyanate, is added (step B) and mixed. Other suitable monomers can be used as those set forth above.

### 4. Microcapsule formation

The so prepared internal phase is added to the aqueous phase (step C) stirred at 8000 rpm using the mixer. However, also other ways of combining (see above, homogenizer incorporating high shear mixing) and other mixing speeds are possible - After short mixing , the shell forming monomer 2, e.g. polyamine solution is added. If a mixer is used, the mixture is immediately removed from the mixer. The mixture is maintained at about 60°C with slow speed stirring. However, also other temperature ranges might be possible as explained above.

All steps of above general or more detailed described reactions may be accomplished by either a batch or continuous process.

As set forth above, the water-absorbing component of the entire microcapsule composition is from about 0.1 to 10% by weight of the composition, preferably from 0.2 to 5% by weight of the composition.

The present invention furthermore comprises a method of combating harmful organism such as harmful insects and/or phytopathogenic fungi, which comprises contacting said harmful organisms or their habit, breeding ground, food supply, plants, seed, soil, area, material or environment in which the harmful organisms are growing or may grow, or the materials, plants, seeds, soils, surfaces or spaces to be protected from attack or infestation by harmful organisms with an effective amount of a microcapsule composition according to the present invention.

The term seed embraces seeds and plant propagules of all kinds including but not limited to true seeds, seed pieces, suckers, corms, bulbs, fruit, tubers, grains, cuttings, cut shoots and the like and means in a preferred embodiment true seeds.

Suitable seed is seed of cereals, root crops, oil crops, vegetables, spices, ornamentals, for example seed of durum and other wheat, barley, oats, rye, maize (fodder maize and sugar maize / sweet and field corn), soybeans, oil crops, crucifers, cotton, sunflowers, bananas, rice, oilseed rape, turnip rape, sugarbeet, fodder beet, eggplants, potatoes, grass, lawn, turf, fodder grass, tomatoes, leeks, pumpkin/squash, cabbage, iceberg lettuce, pepper, cucumbers, melons, Brassica species, melons, beans, peas, garlic, onions, carrots, tuberous plants such as potatoes, sugar cane, tobacco, grapes, petunias, geranium/pelargoniums, pansies and impatiens.

The present invention furthermore comprises a method for controlling undesirable vegetation, which comprises allowing a herbicidally effective amount a microcapsule composition according to the present invention to act on plants, their habitat or on seed of plants.

The term seed treatment comprises all suitable seed treatment techniques known in the art, such as, but not limited to, seed dressing, seed coating, seed dusting, seed soaking, seed film coating, seed multilayer coating, seed encrusting, seed dripping, and seed pelleting.

For example, seeds can be treated with an aqueous suspension comprising the microcapsules of the present invention. Also dry blending of seeds as decribed above can be performed.

The term phytopathogenic fungi includes but is not limited to the following arthropods and nematodes:
Alternaria spp. on rice, vegetables, soybeans, canola/oilseed rape and sugarbeet and fruit
Aphanomyces spp. on sugarbeet and vegetables
Bipolaris and Drechslera spp. on corn, cereals, rice and turf,
Blumeria graminis (powdery mildew) on cereals,
Botrytis cinerea (gray mold) on strawberries, vegetables, ornamentals and grapevines, Bremia lactucae on lettuce
Cercospora spp. on corn, soyabeans and sugarbeet
Cochliobolus spp. on corn, cereals on rice (e.g. Cochliobolus sativus on cereals, Cochliobolus miyabeanus on rice)
Colletotrichum spp. on soybeans and cotton
Drechslera spp. on cereals and corn
Exserohilum spp. on corn
Erysiphe cichoracearum and Sphaerotheca fuliginea on cucurbits,
Erysiphe necator on grapevines
Fusarium and Verticillium spp. on various plants,
Gaeumannomyces graminis on cereals
Gibberella spp. on cereals and rice (e.g. Gibberella fujikuroi on rice, Gibberella zeae on cereals)
Grainstaining complex on rice
Microdochium nivale on cereals
Mycosphaerella spp. on cereals, bananas and peanuts,
Phakopsora pachyrhizi and Phakopsora meibomiae on soybeans
Phomopsis spp. on soybeans and sunflower
Phytophthora infestans on potatoes and tomatoes,
Plasmopara viticola on grapevines,
Podosphaera leucotricha on apples,
Pseudocercosporella herpotrichoides on wheat and barley,
Pseudoperonospora spp. on hops and cucumbers,
Puccinia spp. on cereals and corn,
Pyrenophora spp. on cereals
Pyricularia oryzae on rice,
Cochliobolus miyabeanus and Corticium sasakii (Rhizoctonia solani), Fusarium semitectum (and/or moniliforme), Cercospora oryzae, Sarocladium oryzae, S attenuatum, Entyloma oryzae, Gibberella fujikuroi (bakanae), Grainstaining complex (various pathogens), Bipolaris spp., Drechslera spp. and Pythium and Rhizoctonia spp. on rice, corn, cotton, canola, oilseed rape, sunflower, sugarbeet, vegetables, turf, nuts and other various plants
Rhizoctonia solani on potato
Sclerotinia spp. on canola/oilseed rape and sunflower
Septoria tritici and Stagonospora nodorum on wheat,
Uncinula necator on grapevines,
Sphacelotheca reiliana on corn
Thievaliopsis spp. on soybeans and cotton
Tilletia spp. on cereals
Ustilago spp. on cereals corn, and sugar cane, and
Venturia spp. (scab) on apples and pears;

The term harmful insect pests includes but is not limited to the following arthropods and nematodes:
millipedes (Diplopoda) such as Blaniulus species
Ants (Hymenoptera), such as. Atta capiguara, Atta cephalotes, Atta laevigata, Atta robusta, Atta sexdens, Atta texana, Monomorium pharaonis, Solenopsis geminata, Solenopsis invicta, Pogonomyrmex species and Pheidole megacephala,
Beetles (Coleoptera), such as Agrilus sinuatus, Agriotes lineatus, Agriotes obscurus and other Agriotes species, Amphimallus solstitialis, Anisandrus dispar, Anthonomus grandis, Anthonomus pomorum, Aracanthus morei, Atomaria linearis, Blapstinus species, Blastophagus piniperda, Blitophaga undata, Bothynoderes punciventris, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus and other Conoderus species, Conorhynchus mendicus, Crioceris asparagi, Cylindrocopturus adspersus, Diabrotica (longicornis) barberi, Diabrotica semi-punctata, Diabrotica speciosa, Diabrotica undecimpunctata, Diabrotica virgifera and other Diabrotica species, Eleodes species, Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus and other Limonius species, Lissorhoptrus oryzophilus, Listronotus bonariensis, Melanotus communis and other Melanotus species, Meligethes aeneus, Melolontha hippocastani, Melolontha melolontha, Oulema oryzae, Ortiorrhynchus sulcatus, Oryzophagus oryzae, Otiorrhynchus ovatus, Oulema oryzae, Phaedon cochleariae, Phyllotreta chrysocephala, Phyllophaga cuyabana and other Phyllophaga species, Phyllopertha horticola, Phyllotreta nemorum, Phyllotreta striolata, and other Phyllotreta species, Popillia japonica, Promecops carinicollis, Premnotrypes voraz, Psylliodes species, Sitona lineatus, Sitophilus granaria, Sternechus pinguis, Sternechus subsignatus, and Tanymechus palliatus and other Tanymechus species, Flies (Diptera) such as Agromyza oryzea, Chrysomya bezziana, Chrysomya hominivorax, Chrysomya macellaria, Contarinia sorghicola, Cordylobia anthropophaga, Dacus cucurbitae, Dacus oleae, Dasineura brassicae, Delia antique, Delia coarctata, Delia platura, Delia radicum, Fannia canicularis, Gasterophilus intestinalis, Geomyza Tripunctata, Glossina morsitans, Haematobia irritans, Haplodiplosis equestris, Hypoderma lineata, Liriomyza sativae, Liriomyza trifolii, Lucilia caprina, Lucilia cuprina, Lucilia sericata, Lycoria pectoralis, Mayetiola destructor, Muscina stabulans, Oestrus ovis, Opomyza florum, Oscinella frit, Pegomya hysocyami, Phorbia antiqua, Phorbia brassicae, Phorbia coarctata, Progonya leyoscianii, Psila rosae, Rhagoletis cerasi, Rhagoletis pomonella, Tabanus bovinus, Tetanops myopaeformis, Tipula oleracea and Tipula paludosa,
Heteropterans (Heteroptera), such as Acrosternum hilare, Blissus leucopterus, Cicadellidae such as Empoasca fabae, Chrysomelidae, Cyrtopeltis notatus, Delpahcidae, Dysdercus cingulatus, Dysdercus intermedius, Eurygaster integriceps, Euschistus impictiventris, Leptoglossus phyllopus, Lygus lineolaris, Lygus pratensis, Nephotettix species, Nezara viridula, Pentatomidae, Piesma quadrata, Solubea insularis and Thyanta perditor,
Aphids and other homopterans (Homoptera), e.g. Acyrthosiphon onobrychis, Adelges laricis, Aphidula nasturtii, Aphis fabae, Aphis forbesi, Aphis glycines, Aphis gossypii, Aphis grossulariae, Aphis pomi, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus horni, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes (Myzus) persicae, Myzus ascalonicus, Myzus cerasi, Myzus varians, Nasonovia ribis-nigri, Nilaparvata lugens, Pemphigus bursarius, Pemphigus populivenae, and other Pemphigus species, Perkinsiella saccharicida, Phorodon humuli, Psyllidae such as Psylla mali, Psylla piri and other Psylla species, Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Trialeurodes vaporariorum, Toxoptera aurantiiand, and Viteus vitifolii; Lepidopterans (Lepidoptera), for example Agrotis ypsilon, Agrotis segetum and other Agrotis species, Alabama argillacea, Anticarsia gemmatalis, Argyresthia conjugella, Autographa gamma, Bupalus piniarius, Cacoecia murinana, Capua reticulana, Cheimatobia brumata, Chilo suppresalis and other Chilo species,Choristoneura fumiferana, Choristoneura occidentalis, Cirphis unipuncta, Cnaphlocrocis medinalis, Cydia pomonella, Dendrolimus pini, Diaphania nitidalis, Diatraea grandiosella, Earias insulana, Elasmopalpus lignosellus, Eupoecilia ambiguella, Euxoa species, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Lerodea eufala, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Momphidae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta,Sesamia nonagrioides and other Sesamia species, Sitotroga cerealella, Sparganothis pilleriana, Spodoptera frugiperda, Spodoptera littoralis, Spodoptera litura, Thaumatopoea pityocampa, Tortrix viridana, Trichoplusia ni and Zeiraphera canadensis,
orthopterans (Orthoptera), such as Acrididae, Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus and Tachycines asynamorus ;
termites (Isoptera), such as Calotermes flavicollis, Coptotermes species, Dalbulus maidis, Leucotermes flavipes, Macrotermes gilvus, Reticulitermes lucifugus and Termes natalensis;
thrips (Thysanoptera) such as Frankliniella fusca, Frankliniella occidentalis, Frankliniella tritici and other Frankliniella species, Scirtothrips citri, Thrips oryzae, Thrips palmi, Thrips simplex and Thrips tabaci,
Arachnoidea, such as arachnids (Acarina), for example e.g. of the families Argasidae, Ixodidae and Sarcoptidae, such as Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Ornithodorus moubata, Otobius megnini, Dermanyssus gallinae, Psoroptes ovis, Rhipicephalus appendiculatus, Rhipicephalus evertsi, Sarcoptes scabiei, and Eriophyidae species such as Aculus schlechtendali, Phyllocoptrata oleivora and Eriophyes sheldoni; Tarsonemidae species such as Phytonemus pallidus and Polyphagotarsonemus latus; Tenuipalpidae species such as Brevipalpus phoenicis; Tetranychidae species such as Tetranychus cinnabarinus, Tetranychus kanzawai, Tetranychus pacificus, Tetranychus telarius and Tetranychus urticae, Panonychus ulmi, Panonychus citri, and Oligonychus pratensis;
Nematodes, especially plant parasitic nematodes such as root knot nematodes, Meloidogyne hapla, Meloidogyne incognita, Meloidogyne javanica, and other Meloidogyne species; cyst-forming nematodes, Globodera rostochiensis and other Globodera species; Heterodera avenae, Heterodera glycines, Heterodera schachtii, Heterodera trifolii, and other Heterodera species; Seed gall nematodes, Anguina species; Stem and foliar nematodes, Aphelenchoides species; Sting nematodes, Belonolaimus longicaudatus and other Belonolaimus species; Pine nematodes, Bursaphelenchus xylophilus and other Bursaphelenchus species; Ring nematodes, Criconema species, Criconemella species, Criconemoides species, Mesocriconema species; Stem and bulb nematodes, Ditylenchus destructor, Ditylenchus dipsaci and other Ditylenchus species; Awl nematodes, Dolichodorus species; Spiral nematodes, Heliocotylenchus multicinctus and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, Longidorus elongatus and other Longidorus species; Lesion nematodes, Pratylenchus neglectus, Pratylenchus penetrans, Pratylenchus curvitatus, Pratylenchus goodeyi and other Pratylenchus species; Burrowing nematodes, Radopholus similis and other Radopholus species; Reniform nematodes, Rotylenchus robustus and other Rotylenchus species; Scutellonema species; Stubby root nematodes, Trichodorus primitivus and other Trichodorus species, Paratrichodorus species; Stunt nematodes, Tylenchorhynchus claytoni, Tylenchorhynchus dubius and other Tylenchorhynchus species; Citrus nematodes, Tylenchulus species; Dagger nematodes, Xiphinema species; and other plant parasitic nematode species.

The control of undesired vegetation is understood as meaning the destruction of weeds. Weeds, in the broadest sense, are understood as meaning all those plants which grow in locations where they are undesired, for example:
Dicotyledonous weeds of the genera: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Monocotyledonous weeds of the genera: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristyslis, Sagittaria, Eleocharis, Scirpus, Paspalum, Ischaemum, Sphenoclea, Dactyloctenium, Agrostis, Alopecurus, Apera.

The microcapsules of the invention are evaluated as follows:
a. Measurements of the particle size distribution of the microcapsules.
b. Observations of the structure of the microcapsules by microscopy to examine the shape and appearance of the microcapsules and determine if there are any inclusions within the capsules.
c. Measurement of the completeness of the encapsulation of the active ingredient.
d. Measurement of the extent of water-uptake of the microcapsules on dilution.
e. Bioefficacy.

The measurement of water-uptake can be done by measurement of the particle size distribution of the microcapsules and determination of the median diameter. By calculation, the increase in volume of the microcapsules can be calculated from dV =(D/D₀)³,
where dV is the ratio of initial capsule volume to final capsule volume, D = final capsule median diameter and Dₒ = initial capsule median diameter. The increase in volume is due to water uptake. The uptake of water can also be demonstrated by microscopy. The water entering the microcapsule is visible as droplets within the capsule core. These can be seen to increase in size as the time in contact with the diluent water increases. It is also possible to observe the increase in diameter of the capsules and how the capsule wall becomes stretched and the capsules become perfectly spherical with no dimples as is seen in the undiluted capsules.

The bioefficacy is determined as known by the expert e.g. by by preparing flats of soil and planting them with a variety of weed seeds. Dilutions of the microcapsule formulations of pendimethalin are made in water and applied by spraying to the soil surface at a range of active ingredient concentrations. The flats are then placed in a greenhouse for the seeds to germinate and emerge. The effect of the pesticide on the growing plants is observed.

### Experimental

The following examples are put forth so as to provide those of ordinary skill in the art with a complete disclosure and description of how the compositions, and/or methods claimed herein are made and evaluated, and are intended to be purely exemplary of the invention and are not intended to limit the scope of what the inventors regard as their invention. Unless indicated otherwise, percent is percent by weight given the component and the total weight of the composition, temperature is in °C or is at ambient temperature, and pressure is at or near atmospheric.

### Example 1

### Standard Microencapsulation (according to US 5,705,174)

A mixture of Diwatex 200 (a modified lignin emulsifier produced by Lignotech, Rothschild, WI) and magnesium sulfate in water was heated to 60°C, and stirred to obtain an aqueous solution. A salt water-immiscible solution (previously prepared by heating a mixture of pendimethalin and Mondur® MRS diisocyanate (a 4,4'-diphenyl diisocyanate polymer manufactured by Mobay Corp., Pittsburgh, PA) to 60°C) was added to the aqueous solution with stirring to form an emulsion. Thereafter, the stirrer speed was reduced and a solution of 1,6-hexamethylenediamine (HMDA) in water was added to the stirred emulsion and the resultant mixture was stirred for about 2 hours. Kelzan® S xanthan gum (1% solution, Kelco Corp, San Diego, CA) was added with stirring to form the microcapsule composition identified as composition number 1 in Table 1.

### Examples 2-5 (according to invention)

A mixture of Diwatex 200 and magnesium sulfate in water was heated to 60°C and stirred to obtain an aqueous solution. Pendimethalin was heated to 60°C. A solution of Aromatic 200 ExxonMobil, Houston, TX) and Hypermer ®LP6 (polymeric fatty ester, molecular weight average 4300) Uniqema, Wilmington, DE) was prepared and a blend of Atlas G-5000 (Uniqema, Wilmington, DE) (butyl initiated ethylene oxide propylene oxide copolymer) and salt (magnesium sulfate·7H₂O, sodium chloride, sodium bicarbonate or potassium carbonate) was added as an aqueous solution and the mixture was homogenized until a water-in-oil emulsion was formed having a particle size of less than 2 µm.
The hot pendimethalin was stirred into the emulsion. After mixing thoroughly Mondur® MRS diisocyanate (a 4,4'-diphenyl diisocyanate polymer manufactured by Mobay Corp., Pittsburgh, PA was added.
This mixture was then added to the aqueous solution with rapid mixing to form an emulsion. Thereafter, the stirrer speed was reduced and a solution of 1,6-hexamethylenediamine in water was added to the stirred emulsion and the resultant mixture was stirred for about 2 hours.
Kelzan® S (1% solution) was added with stirring to form the microcapsule composition identified as composition number 2-5 in Table 1.

### Example 6 - Microencapsulation of Dimethenamid-p with Fast Release Mechanism

A mixture of Reaxx 88B (MeadWestvaco, Charleston Height, SC (sodium salt of lignosulfonic acid ), magnesium sulfate, antifoam and water was heated to 60°C and stirred to obtain an aqueous solution. Dimethenamid-p was heated to 60°C. A blend of water, sodium bicarbonate and Atlox 5413B (proprietary blend of G-5000, and a nonspecified anionic salt from the above list, Uniqema, Wilmington, DE) Uniqema, Wilmington, DE) was prepared and heated to 60°C and added to the dimethenamid-p and the mixture was homogenized until a water-in-oil emulsion was formed having a particle size of less than 2 microns. Subsequenty Mondur® MRS (a 4,4'-diphenyldiisocyanate polymer ( Bayer, Pittsburgh, PA) was added and mixed thoroughly. This mixture was then added to the aqueous solution with rapid mixing to form an emulsion. Thereafter, the stirrer speed was reduced and a solution of 1,6-hexamethylenediamine in water was added to the stirred emulsion and the resultant mixture was stirred for about 2 hours. Kelzan® S (1 % solution) was added with stirring to form the microcapsule composition identified as composition number 6 in Table 1.

**Table 1**

| Example No. | 1 | 2 | 3 | 4 | 5 | 6 |
|---|---|---|---|---|---|---|
| % wall | 2.0 | 1.0 | 2.0 | 4.0 | 4.0 | 1.8 |
| D (V,0.5) microns | 5.66 | 5.11 | 5.97 | 3.46 | 6.23 | 7.7 |
| % herbicide | 33.0 | 24.0 | 35.3 | 24.3 | 24.3 | 38.7 |
| herbicide [pendimethalin (P)/dimethenamid-p (D)] | | | | | | |
| | P | P | P | P | P | D |
| % technical | 35.1 | 25.57 | 33.1 | 25.57 | 25.57 | 41.6 |

| Capsule Core: | | | | | | |
|---|---|---|---|---|---|---|
| Mondur® MRS | 0.53 | 0.36 | 0.54 | 1.20 | 1.20 | 1.3 |
| Aromatic 200 | ---- | 8.86 | 0.56 | 8.86 | 8.86 | ----- |
| Hypermer® LP6 | ---- | 0.35 | 0.13 | 0.35 | 0.35 | ----- |
| Atlox® G-5000 | ---- | 0.53 | ---- | 0.53 | 0.53 | ----- |
| Atlox 5413B | ---- | ---- | ---- | ---- | ---- | 0.2 |
| Magnesium | | | | | | |
| sulfate.7H₂O | ---- | ---- | 0.56 | ----- | ---- | ---- |
| Sodium chloride | ---- | 0.99 | ---- | ----- | ---- | ---- |
| Sodium bicarbonate | ---- | ---- | ---- | 0.50 | ---- | 0.5 |
| Potassium carbonate | ---- | ---- | ---- | ---- | 1.25 | ---- |
| Deionized water | ---- | 3.41 | ---- | 4.50 | 3.75 | 4.50 |

| Aqueous Phase: | | | | | | |
|---|---|---|---|---|---|---|
| Deionized water | 34.54 | 34.95 | 36.0 | 35.10 | 35.10 | 22.95 |
| Diwatex 200, 15% solution | 6.50 | 6.55 | 6.84 | 6.65 | 6.65 | ---- |
| Reax 88B | ---- | ---- | ---- | ---- | ---- | 6.6 |
| Magnesium sulfate. heptahydrate | 17.11 | 17.51 | 18.00 | 17.85 | 17.85 | 18.5 |
| Antifoam TH IND 30 AF | 0.06 | 0.06 | 0.06 | 0.05 | 0.05 | 0.05 |
| HMDA, 25% solution | 0.74 | 0.26 | 0.76 | 1.80 | 1.80 | 1.80 |
| Kelzan®, 1 % solution | 1.25 | 0.51 | 1.32 | 4.00 | 4.00 | 2.00 |
| Totals | 100 | 100 | 100 | 100 | 100 | 100 |
| | Standard | NaCl Internal | MgSO₄ internal | NaHCO₃ internal | K₂CO₃ internal | NaHCO₃ internal |

The components headed by "Capsule Core" are used to form the capsule core (or internal phase); the components headed by "Aqueous Phase" are used to form the aqueous phase (or external phase).

### Example 7

### Microcapsule Evaluations

The measurement of water-uptake was carried out by measurement of the particle size distribution of the microcapsules and determination of the median diameter. By calculation, the increase in volume of the microcapsules was calculated from dV =(D/D₀)³, where dV is the ratio of initial capsule volume to final capsule volume, D = final capsule median diameter and Do = initial capsule median diameter. The increase in volume was due to water uptake.
The uptake of water was also demonstrated by microscopy. The water entering the microcapsule was visible as droplets within the capsule core. The increase in size after 1 hour in contact with the diluent water was measured. It is also possible to observe the increase in diameter of the capsules and how the capsule wall became stretched and the capsules became perfectly spherical with no dimples as was seen in the undiluted capsules.
The bioefficacy was determined by preparing flats of soil and planting them with a variety of weed seeds Dilutions of the microcapsule formulations of pendimethalin were made in water and applied by spraying to the soil surface at a range of active ingredient concentrations. The flats are then placed in a greenhouse for the seeds to germinate and emerge. The effect of the pesticide on the growing plants was observed. The results are set forth in Table 2, where the compositions 1-5 are the same as those listed in Table 1

**Table 2**

| Test | 1 | 2 | 3 | 4 | 5 | 6 |
|---|---|---|---|---|---|---|
| Swelling on dilution | None | Yes | Yes | Yes | Yes | ---- |
| | | | | | | |
| dV (increase in capsule volume after 1 hour in deionized water) | 1.02 | 2 | 2 | 4.5 | 15.4 | ---- |
| dV (increase in volume after 1 hour in water at pH 3.5) | 1.02 | 2 | 2 | 6.0 | 11.5 | ---- |
| | | | | | | |
| Microscopy: water inclusions | No | some | some | many | many | many |
| Bioefficacy: estimated % injury 14 DAT, crabgrass | 60 | ND | ND | 95 | 95 | ---- |

## Claims

1. A microcapsule comprising a core, which comprises a continuous phase consisting of
a water immiscible active ingredient (I), or water immiscible solvent and a water immiscible active ingredient (I), and
water immiscible surfactants or a mixture of water immiscible surfactants,
wherein in said continuous phase a water absorbant component is present in form of an aqueous solution or dispersion, which is emulsified in the continuous phase of the core material;
wherein the core is surrounded by a shell wall;
wherein the shell wall comprises wall forming monomer 1 and wall forming monomer 2;
wherein the wall forming monomer 1 refers to a polyisocyanate, a polyacid chloride, a polychloroformate or a polysulfonyl chloride;
wherein the wall forming monomer 2 refers to a polyamine or a polyol; and
wherein the water immiscible active ingredient (I) refers at least one compound selected from the group consisting of fungicides, insecticides, nematicides, herbicide and/or safeners.

2. The microcapsule of claim 1 which contains 5% to 50% by weight of the water-immiscible active ingredient (I) and 5% to 40% by weight of the water absorbant component in the core material.

3. The microcapsule of claim 1 or 2 wherein the water-immiscible active ingredient (I) is a herbicide or insecticide or fungicide or combinations thereof.

4. The microcapsule according to any of claims 1 to 3 wherein the active ingredient (I) is a dinitroaniline compound and/or chloracetanilide.

5. The microcapsule according to any of claims 1 to 4 wherein the water absorbant component is selected from salts, which comprise as cationic component alkaline metals or earth alkaline metals, and as anionic component a halogen or anions of borate, carbonate, bicarbonate, nitrate, aluminate, silicate, monophosphate, biphosphate, triphosphate, monosulfate, bisulfate, formate, acetate, propionate, citrate, lactate.

6. The microcapsule according to any of claims 1 to 5 wherein the water absorbant component of the microcapsule composition is from 0.1 to 10% by weight of the composition.

7. The microcapsule according to any of claims 1 to 6 wherein the water absorbant component is present in form of an aqueous solution, which is emulsified in the continuous phase of the core material.

8. The microcapsule according to any of claims 1 to 7 wherein the water-immiscible solvents are aromatic and/or aliphatic hydrocarbons.

9. An agrochemical formulation comprising the microcapsules of any of claims 1 to 8 dispersed in a solvent.

10. A method for the protection of seed comprising contacting the seeds before sowing with a microcapsules according to any of claims 1 to 8.

11. Seeds treated with a microcapsules according to any of claims 1 to 8.

12. A method of combating harmful organism such as harmful insects and/or phytopathogenic fungi, which comprises contacting said harmful organisms or their habit, breeding ground, food supply, plants, seed, soil, area, material or environment in which the harmful organisms are growing or may grow, or the materials, plants, seeds, soils, surfaces or spaces to be protected from attack or infestation by harmful organisms with an fungicidally or insecticidally effective amount of a microcapsule composition according to any of claims 1 to 8.

13. A method for controlling undesirable vegetation, which comprises allowing a herbicidally effective amount of a microcapsule composition according to any of claims 1 to 8 to act on harmful plants, their habitat or on seed.
